# EUROPÄISCHE PATENTSCHRIFT

(11) **EP 2 517 262 B1**
(45) Veröffentlichungstag und Bekanntmachung des Hinweises auf die Patenterteilung: **11.04.2018**
(21) Anmeldenummer: 10773857.7
(22) Anmeldetag: 27.10.2010
(51) Int. Cl.: H02S 20/00

(54) **VORRICHTUNG ZUM BEFESTIGEN PANEELARTIGER MATTEN**
DEVICE FOR FASTENING PANEL-FORM MATS
DISPOSITIF DESTINÉ À LA FIXATION DE MATS DE TYPE PANNEAU

(30) Priorität: 23.12.2009 DE 102009060498
(43) Veröffentlichungstag der Anmeldung: 31.10.2012
(73) Patentinhaber: Gottlieb Binder GmbH & Co. KG, 71088 Holzgerlingen (DE)
(72) Erfinder: POULAKIS, Konstantinos, 71157 Hildrizhausen (DE)
(74) Vertreter: Bartels und Partner, Patentanwälte
(86) Internationale Anmeldenummer: PCT/EP2010/006573
(87) Internationale Veröffentlichungsnummer: WO 2011/076307

(56) Entgegenhaltungen:
- DE-U1-202008 009 241
- US-A1- 2006 266 405
- US-A1- 2007 227 573

## Beschreibung

Die Erfindung betrifft eine Vorrichtung zum Befestigen paneelartiger Matten, insbesondere flexibler fotovoltaischer Solarpanel, an einer Tragstruktur.

Im Zuge der fortschreitenden Weiterentwicklung von Solarzellen hat die solare Energiegewinnung auf einer Vielzahl von Anwendungsgebieten Eingang genommen. So werden Solarpanel nicht nur zur stationären Energiegewinnung zur Versorgung von Gebäuden an Dächern oder Fassaden angebracht oder auf entsprechenden Nutzflächen aufgestellt, sondern finden in Form mattenartiger, flexibler Solarpanel, die auch als Dünnfilm-Solarpanel bezeichnet werden, mobile Verwendung. Derartige flexible Solarpanel werden hierbei beispielsweise an Außenflächen, insbesondere Dachflächen, von Fahrzeugen oder Sport- oder Freizeitgeräten, an Sportflugzeugen, wie Segelflugzeugen, angebracht, um eine autarke Stromversorgung zu bilden oder diese zu unterstützen. Neben einer Vielzahl weiterer Anwendungsmöglichkeiten eignen sich mattenartige Solarpanel aufgrund ihrer Flexibilität auch für eine Anbringung an bestimmten Arten von Funktionskleidungen, etwa bei Sicherheitsbekleidungen zur Versorgung von integrierten Telemetrie- oder Kommunikationseinrichtungen.

In Anbetracht der mechanischen Eigenschaften flexibler Solarpanel gestaltet sich die Befestigung an betreffenden Tragstrukturen schwierig. Die Flexibilität der Panel erleichtert zwar die Anbringung an nicht ebenen Trägerflächen, wie dies bei Karosserieteilen von Fahrzeugen zumeist, jedoch auch bei anderen Gerätschaften oft der Fall ist. In dem Dokument WO 2007/123927 A2 ist diesbezüglich eine Lösung offenbart, bei der an der gesamten Unterseite der mattenartigen Struktur eine Haftverbindung mit der anliegenden Tragstruktur gebildet ist. Diese Lösung ist insofern nicht voll befriedigend, als die Oberfläche der Tragstruktur für die Bildung der großflächigen Haftverbindung geeignet sein muss und weil starke Temperaturänderungen, wie sie mit hohen Temperaturwerten etwa an Fahrzeugkarosserien auftreten können, aufgrund verschiedener thermischer Ausdehnungskoeffizienten zu Verspannungen oder Verwerfungen führen können.

Aus der DE 20 2008 009 241 U1 geht ein Halteprofil für plattenförmige Module hervor. Diese Module können Dachmodule sein. Das Halteprofil weist einen einteiligen flexiblen Profilkörper aus Kunststoff auf, in dem die plattenförmigen Module formschlüssig gehalten sind.

Im Hinblick auf diese Problematik liegt der Erfindung die Aufgabe zugrunde, eine Vorrichtung zur Verfügung zu stellen, die eine einfache, kostengünstige und sichere Befestigung paneelartiger Matten, wie flexibler Solarpanel, ermöglicht.

Erfindungsgemäß ist diese Aufgabe durch eine Vorrichtung gelöst, die die Merkmale des Patentanspruches 1 in seiner Gesamtheit aufweist.

Demgemäß sieht die Erfindung vor, dass Klemmhalter aus Kunststoff vorgesehen sind, die die Form von Abschnitten eines Profilkörpers aus Kunststoff besitzen, wobei einander gegenüberliegende Profilschenkel zwischen sich einen Klemmraum bilden, um zwischen sich einen Haltebereich einer betreffenden Matte oder eines Solarpanels mit elastischer Klemmkraft festzuklemmen. Die Klemmhalter ihrerseits weisen für die Anbringung an der Tragstruktur eine Festlegefläche an der Außenseite des Profilschenkels auf, welcher im Klemmzustand an der Unterseite des geklemmten Haltebereiches anliegt, wobei zwischen Festlegefläche und Tragstruktur ein Verbindungselement vorgesehen ist. Die Benutzung von Klemmhaltern bildet eine kraftschlüssige Verankerung, bei der Relativverschiebungen zwischen Panel und den durch die Klemmbereiche der Klemmhalter gebildeten Fixpunkten möglich sind, so dass Wärmedehnungen der Tragstrukturen kompensierbar und Spannungen und Rissbildungen dadurch vermeidbar sind. Die Vorrichtung zeichnet sich durch geringen Montageaufwand aus und ist zudem äu-βerst kostengünstig, da keine großflächigen, sich über die gesamte Unterseite des Panels erstreckenden Verbindungselemente erforderlich sind.

Bei besonders vorteilhaften Ausführungsbeispielen ist als Verbindungselement an der Festlegefläche des unteren Profilschenkels ein Haftverschlussteil angebracht, dessen Verhakungselemente eine Haftverbindung mit an der Tragstruktur befindlichen Verhakungselementen bilden. Ein derartiges Haftverschlussteil kann in an sich bekannter Weise Verhakungselemente in der Form von Pilzköpfen, Schlingen oder Haken aufweisen. Bei Verhakungselementen in Form von Haken können die Klemmhalter auf besonders vorteilhafte Weise an textilen oder flauschigen Tragstrukturen festgelegt werden, wobei die textile Struktur oder der Flausch selbst die Verhakungselemente an der Tragstruktur bilden. Die dem Klemmhalter zugehörigen Verhakungselemente können an einem gesonderten Haftverschlussteil vorgesehen sein, dessen Träger mit der Festlegefläche des betreffenden Profilschenkels verklebt oder verschweißt ist. Alternativ können insbesondere pilzkopfartig ausgebildete Verhakungselemente auch an der Festlegefläche aus dem Werkstoff des Profilschenkels selbst gebildet sein.

In vorteilhafter Weise können Klemmhalter mit langgestreckten Profilschenkeln in Form flacher Bänder vorgesehen sein, von denen der an der Unterseite des Haltebereichs einer betreffenden Matte anliegende Schenkel länger als der obere Schenkel ist. Während somit durch einen Profilschenkel verhältnismäßig kürzerer Länge eine gewünschte, ausreichende Klemmkraft realisierbar ist, steht an dem demgemäß längeren, anderen Profilschenkel eine Festlegefläche mit gewünschter Flächengröße zur Verfügung.

Die Anordnung kann mit Vorteil so getroffen sein, dass der untere Schenkel die Form eines ebenen Bandes besitzt und innenseitig eine ebene Klemmfläche für den Haltebereich eines Solarpanels und außenseitig eine ebene, das Verbindungselement aufnehmende Festlegefläche bildet.

Hinsichtlich der Formgebung des oberen Profilschenkels kann dieser in vorteilhafter Weise in seinem Anfangsbereich einen dem unteren Schenkel entsprechenden ebenen Verlauf besitzen und in seinem mittleren Längenbereich in einen sich an den unteren Schenkel annähernden, gewölbten Verlauf derart übergehen, dass in der Nähe des freien Endes eine gewölbte Klemmfläche gebildet ist, wonach die Wölbung zum freien Ende hin in einen sich vom unteren Schenkel entfernenden Verlauf übergeht. Eine derartige Formgebung erleichtert das Aufstecken der Klemmhalter auf die Haltebereiche des betreffenden Panels dank des nach außen gewölbten Endbereiches des oberen Profilschenkels, wobei gleichzeitig aufgrund der gebildeten, gewölbten Klemmfläche die Klemmkraft mit hoher Flächenpressung auf den Haltebereich einwirkt.

Bei einem Einsatz der Vorrichtung für ein Solarpanel, bei dem Haltebereiche durch Randzonen gebildet sind, die eine geringere Stärke als die innerhalb der Randzonen befindlichen Solarmodule besitzen, können die Profilschenkel der Klemmhalter über einen Profilsteg miteinander zusammenhängen, dessen Länge geringer ist als die aus den Stärken von Solarmodulen und Randzonen gebildete Höhe des Solarpanels. Die Klemmhalter besitzen somit die Form flacher Klammern, die im Klemmzustand keinerlei über die Oberseite der Solarmodule vorstehende Erhöhung bilden.

In besonders vorteilhafter Weise kann der Profilkörper der Klemmhalter aus einem thermoplastischen, gut verklebbaren Polymer, beispielsweise Acrylnitril-Butadien-Styrol (ABS), gebildet sein.

In Anbetracht dessen, dass die Klemmhalter bei einer Vorrichtung zum Befestigen von Solarpaneln während der Benutzung exponiert sind, ist zumindest der beim Klemmzustand freiliegende Teil des Klemmhalters vorzugsweise außenseitig mit einer sonnenbeständigen und witterungsbeständigen Beschichtung, etwas aus Polymethylmethacrylat (PMMA), versehen.

Nachstehend ist die Erfindung anhand eines in der Zeichnung dargestellten Ausführungsbeispieles im Einzelnen erläutert. Es zeigen:
- Fig. 1: eine stark vereinfacht gezeichnete perspektivische Schrägansicht auf die Oberseite eines Solarpanels, wobei lediglich an zwei außerhalb der Solarmodule gelegenen Randzonen ein Klemmhalter gemäß einem Ausführungsbeispiel der erfindungsgemäßen Vorrichtung angeordnet ist;
- Fig. 2: eine gegenüber einer praktischen Ausführungsform geringfügig vergrößert dargestellte Seitenansicht eines einzelnen Klemmhalters gemäß dem Ausführungsbeispiel der Erfindung, und
- Fig. 3: einen im Maßstab entsprechend Fig. 2 dargestellten Teilschnitt gemäß der Schnittlinie III-III von Fig. 2.

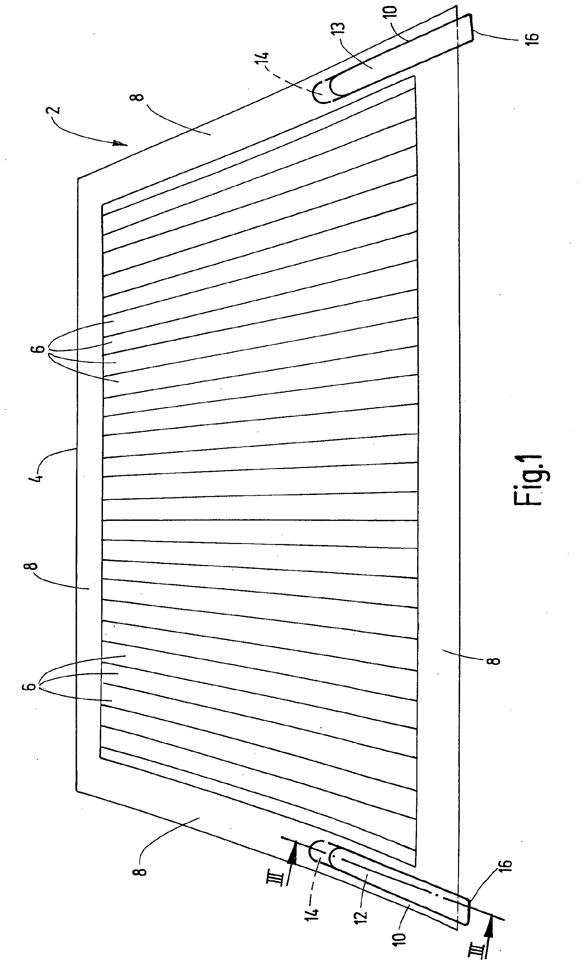

Nachstehend ist die Erfindung am Beispiel der Befestigung eines mattenartigen, flexiblen Solarpanels erläutert. Es versteht sich, dass die Erfindung gleichermaßen für das Befestigen andersartiger paneelartiger Matten geeignet ist. Das in Fig. 1 als Ganzes mit 2 bezeichnete Solarpanel weist auf einer Trägerbahn 4, die aus einem vorzugsweise genoppten Kunststoffblatt mit rechteckigem Umriss gebildet ist, eine Anordnung aus einer Vielzahl von Solarmodulen auf, von denen in Fig. 1 lediglich einige Reihen mit 6 bezeichnet sind. Bei handelsüblichen Solarmodulen 2 dieser Art hat die Bahn 4 Abmessungen in der Größenordnung von 55 x 40 cm und besteht aus einem witterungsbeständigen Kunststoffmaterial, wie PMMA oder PTFE. Die Solarmodule 6 sind auf der Bahn 4 so angeordnet, dass entlang der vier Seiten freibleibende Randzonen 8 gebildet sind. Im vorliegenden Beispiel werden diese Randzonen 8 als Haltebereiche genutzt, um in Zusammenwirkung mit Klemmhaltern 10 der erfindungsgemäßen Vorrichtung das Solarpanel 2 an einer Tragstruktur, die in den Fig. nicht gezeigt ist, zu verankern. Bei der Darstellung von Fig. 1 sind lediglich zwei Klemmhalter 10 an einander gegenüberliegenden Seitenrändern gezeigt. Im praktischen Anwendungsfall kann eine geeignete Mehrzahl weiterer Klemmhalter 10 an anderen Bereichen der Randzonen 8 angreifen, beispielsweise an den beiden weiteren Eckbereichen. Bei für Solarstrahlung durchlässigem Werkstoff der Klemmhalter 10 können solche ohne weiteres auch über den Bereich der Solarmodule 6 übergreifend am Solarpanel 2 angeordnet sein.

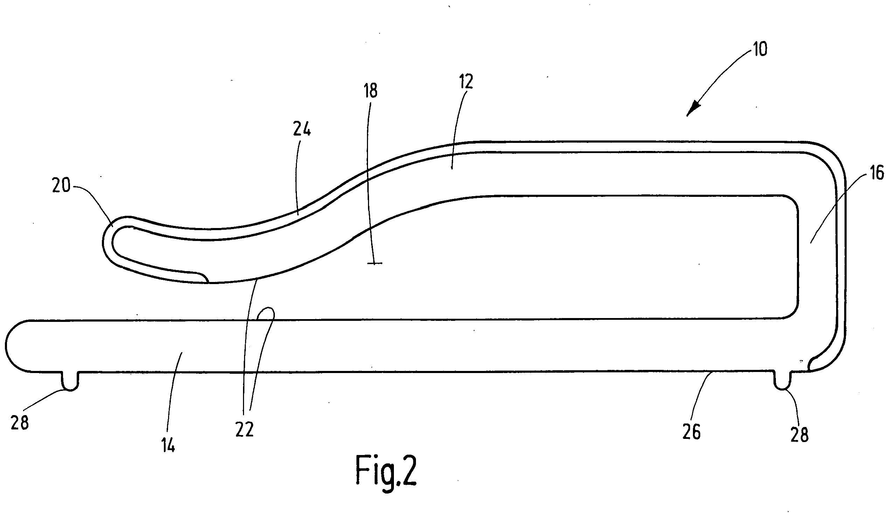

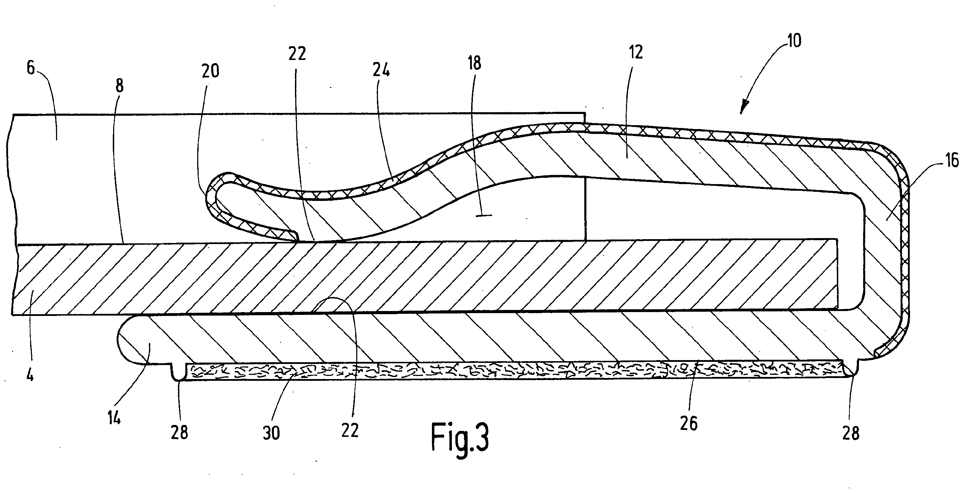

Die Fig. 2 und 3 zeigen nähere Einzelheiten der Klemmhalter 10. Dabei handelt es sich um einstückige Profilkörper aus einem thermoplastischen Kunststoff mit zur Erzeugung einer Klemmkraft geeigneten Elastizitätseigenschaften, wobei es sich vorzugsweise um ein gut verklebbares Polymer wie Acrylnitril-Butadien-Styrol (ABS) handeln kann. Ein derartiger Profilkörper kann auf rationelle Weise dadurch gebildet sein, dass ein entsprechendes Strangprofil extrudiert wird und aus dem Strang Abschnitte abgeteilt werden, die die einzelnen Klemmkörper 10 bilden. Die Fig. 2 und 3 zeigen die Profilform des Profilkörpers mit zwei langgestreckten Profilschenkeln 12 und 14 in Form von miteinander fluchtenden, einander gegenüberliegenden flachen Bändern, von denen der in den Fig. unten liegende Profilschenkel 14 länger ist als der obere Profilschenkel 12. Die Profilschenkel 12, 14 hängen über einen Profilsteg 16 miteinander zusammen, dessen Länge so bemessen ist, dass zwischen den Schenkeln 12, 14 ein Klemmraum 18 gebildet ist, in dem die als Haltebereich dienende Randzone 8 des Solarpanel 2 aufnehmbar ist, der Klemmhalter 10 jedoch bei dem in Fig. 3 gezeigten Klemmzustand nicht über die Oberseite der Solarmodule 6 übersteht.

Die Fig. 3 zeigt den Klemmzustand, bei dem die Randzone 8 mit ihrer Unterseite an der Innenseite des unteren Profilschenkels 14 anliegt und der obere Profilschenkel 12, der gegenüber dem in Fig. 2 gezeigten Zustand gegen seine Elastizitätskraft nach oben ausgelenkt ist, an der Oberseite der Randzone anliegt, um zwischen sich und dem unteren Profilschenkel 14 eine Klemmkraft auszuüben. Wie Fig. 2 und 3 zeigen, hat der obere Schenkel 12 in seinem Anfangsbereich einen dem unteren Schenkel 14 entsprechenden ebenen Verlauf, geht jedoch in einem mittleren Längenabschnitt in einen gegen den unteren Schenkel 14 hin gewölbten Verlauf über und bildet in der Nähe seines freien Endes 20 eine gewölbte Klemmfläche 22, woran sich zum freien Ende 20 hin eine entgegengesetzte Wölbung anschließt, durch die sich das freie Ende 20 vom unteren Profilschenkel 14 wieder entfernt. Durch diesen Verlauf ergibt sich eine Erweiterung des Eingangsbereiches zum Klemmraum 18, wodurch die Montage bei der Anbringung der Klemmhalter 10 vereinfacht ist.

Um die bei der Benutzung exponiert gelegenen Teile der Klemmhalter 10 zu schützen, ist eine sonnenbeständige und witterungsbeständige Beschichtung 24 vorgesehen, die sich am Klemmhalter 10, ausgehend von der Au-ßenseite des Profilsteges 16, über den oberen Profilsteg 12 hinweg und über dessen freies Ende 20 hinaus bis in die Nähe der Klemmfläche 22 erstreckt. Für eine solche Beschichtung 24 kommen beispielsweise Werkstoffe wie Polymethylmethacrylat (PMMA) oder Polythetrafluorethylen (PTFE) in Frage. Auf rationelle Weise kann eine derartige Beschichtung 24 bei der Herstellung des die Klemmhalter 10 bildenden Profilstranges durch ein Koextrusionsverfahren gebildet werden.

Der untere Profilschenkel 14 bildet mit seiner Unterseite die Festlegefläche 26 zur Verankerung an der (nicht gezeigten) Tragstruktur. Bei der Darstellung von Fig. 3 befindet sich zwischen Längsrippen 28 an der Verbindungsfläche 26 ein mit 30 bezeichnetes Verbindungselement. Zur Bildung einer Klebeverbindung mit der Tragstruktur kann es sich bei dem Verbindungselement 30 um eine Klebstoffschicht handeln. In vorteilhafter Weise kann jedoch als Verbindungselement 30 ein Haftverschlussteil vorgesehen sein, das mit der Festlegefläche 26 verklebt oder verschweißt ist. Dabei kann es sich um ein Haftverschlussteil eines für den jeweiligen Anwendungszweck geeigneten Typs handeln, der mit seinen Verhakungselementen mit an der Tragstruktur befindlichen, zugeordneten Verhakungselementen in geeigneter Weise verhakbar ist. Es kommen Verhakungselemente in Pilzkopfform, Hakenform oder Schlaufenform in Frage, je nach den Gegebenheiten an der Tragstruktur. Wenn es sich bei der Oberfläche der Tragstruktur um ein textiles oder flauschartiges Material handelt, können bevorzugt hakenförmige Verhakungselemente vorgesehen sein, die mit dem Flauschmaterial oder der Textilstruktur unmittelbar verhakbar sind. Alternativ können jedoch auch am unteren Profilschenkel 14 unmittelbar angeformte, insbesondere pilzkopfartige Verhakungselemente vorhanden sein, um mit einem an der Tragstruktur befindlichen Kunststoff-Haftverschlussteil zusammen zu wirken.

Vorzugsweise ist vorgesehen, dass die erfindungsgemäße Befestigungsvorrichtung nicht als einzelner Klammerkörper gebildet ist, sondern sich vielmehr über die gesamte Länge und/oder Breite eines fotovoltaischen Solarpanels erstreckt, so dass zusammen mit dem jeweiligen Solarpanel ein Gesamtfestlegesystem erreicht ist, bei dem das jeweilige Panel, in Blickrichtung auf die Fig. 2 und 3 gesehen, senkrecht zur Zeichenebene mit seinem Außenrand einschiebbar ist. Dergestalt kann die jeweilige dann leistenförmig ausgebildete Befestigungsvorrichtung mit vorgebbarer beliebiger Länge an der Grundstruktur haftend verbleiben und ein Austausch des jeweiligen Panels ist zu jeder Zeit möglich, beispielsweise wenn die Fotovoltaikkomponenten des Solarpanels 2 verschlissen sind.

Sofern in der vorliegenden Erfindungslösung von Beschichtung die Rede ist, kann diese durch Auftragsbeschichtung erzeugt sein, oder im Rahmen eines Extrusionsverfahrens oder dergleichen eine Abdeckschicht ausbilden. Anstelle von Polytetrafluorethylen können auch sonstige Polyfluorpolymere eingesetzt werden.

## Patentansprüche

1. Vorrichtung zum Befestigen paneelartiger Matten, insbesondere flexibler fotovoltaischer Solarpanel (2), an einer Tragstruktur, mit zumindest einem Klemmhalter (10) in Form eines Abschnittes eines Profilkörpers aus Kunststoff, der einander gegenüberliegende Profilschenkel (12, 14) aufweist, die zwischen sich einen Klemmraum (18) für einen darin aufgenommenen Haltebereich (8) der betreffenden Matte bilden, in dem die Profilschenkel (12, 14) mit elastischer Klemmkraft an Oberseite und Unterseite des Haltebereiches (8) anliegen, wobei der Profilschenkel (14), der im Klemmzustand an der der Tragstruktur zugewandten Unterseite des Haltebereiches (8) anliegt, an seiner Außenseite eine Festlegefläche (26) bildet, die mit einem zur Anbringung an der Tragstruktur dienenden Verbindungselement (30) versehen ist.

2. Vorrichtung nach Anspruch 1, **dadurch gekennzeichnet, dass** Klemmhalter (10) mit langgestreckten Profilschenkeln (12, 14) in Form flacher Bänder vorgesehen sind, von denen der an der Unterseite des Haltebereiches (8) einer betreffenden Matte anliegende untere Schenkel (14) länger als der obere Schenkel (12) ist.

3. Vorrichtung nach Anspruch 2, **dadurch gekennzeichnet, dass** der untere Schenkel (14) die Form eines ebenen Bandes besitzt und innenseitig eine ebene Klemmfläche (22) für den Haltebereich (8) eines des Solarpanels (2) und außenseitig eine ebene, das Verbindungselement (30) aufnehmende Festlegefläche (26) bildet.

4. Vorrichtung nach Anspruch 3, **dadurch gekennzeichnet, dass** der obere Schenkel (12) in seinem Anfangsbereich einen dem unteren Schenkel (14) entsprechenden ebenen Verlauf besitzt und in seinem mittleren Längenbereich in einen sich an den unteren Schenkel (12) annähernden, gewölbten Verlauf derart übergeht, dass in der Nähe des freien Endes (20) eine gewölbte Klemmfläche (22) gebildet ist, wonach die Wölbung zum freien Ende (20) hin in einen sich vom unteren Schenkel (14) entfernenden Verlauf übergeht.

5. Vorrichtung nach einem der Ansprüche 1 bis 4, **dadurch gekennzeichnet, dass** für ein Solarpanel (2), bei dem Haltebereiche durch Randzonen (8) gebildet sind, die eine geringere Stärke als die innerhalb der Randzonen (8) befindlichen Solarmodule (6) besitzen, die Profilschenkel (12, 14) der Klemmhalter (10) über einen Profilsteg (16) miteinander zusammenhängen, dessen Länge geringer ist als die aus den Stärken von Solarmodulen (6) und Randzonen (8) gebildete Höhe des Solarpanels (2).

6. Vorrichtung nach einem der Ansprüche 1 bis 5, **dadurch gekennzeichnet, dass** der Profilkörper der Klemmhalter (10) aus einem thermoplastischen, gut verklebbaren Polymer, beispielsweise Acrlynitril-Butadien-Styrol (ABS), gebildet ist.

7. Vorrichtung nach einem der Ansprüche 1 bis 6, **dadurch gekennzeichnet, dass** zumindest der beim Klemmzustand freiliegende Teil des Klemmhalters (10) außenseitig mit einer sonnenbeständigen und witterungsbeständigen Schicht (24), etwa aus Polymethylmethacrylat (PMMA), versehen ist.

8. Vorrichtung nach einem der Ansprüche 1 bis 7, **dadurch gekennzeichnet, dass** als Verbindungselement (30) an der Festlegefläche (26) des unteren Profilschenkels (14) ein Haftverschlussteil angebracht ist, dessen Verhakungselemente eine Haftverbindung mit an der Tragstruktur befindlichen Verhakungselementen bilden.

## Claims

1. A device for fastening panel-like mats, in particular flexible photovoltaic solar panels (2), to a supporting structure, having at least one clamping holder (10) in the form of a section of a plastic profiled body which has profiled limbs (12, 14) lying opposite one another and which, between themselves, form a clamping space (18) for a holding region (8) of the respective mat, which region is held in said clamping space, and in which the profiled limbs (12, 14), with a resilient clamping force, adjoin the upper face and the lower face of the holding region (8), the profiled limb (14), which in the clamping state adjoins the lower face of the holding region (8) facing the supporting structure, on its outer face forms a fastening surface (26) which is provided with a connection element (30) for attachment to the supporting structure.

2. The device according to Claim 1, **characterised in that** clamping holders (10) with elongated profiled limbs (12, 14) in the form of flat tapes are provided, of which the lower limb (14) which adjoins the lower face of the holding region (8) of a respective mat is longer than the upper limb (12).

3. The device according to Claim 2, **characterised in that** the lower limb (14) is in the form of a flat tape and on the inside forms a flat clamping surface (22) for the holding region (8) of one of the solar panels (2) and on the outside forms a flat fastening surface (26) which holds the connecting element (30).

4. The device according to Claim 3, **characterised in that** the upper limb (12) in its starting region runs flat so as to correspond to the lower limb (14) and in its middle longitudinal region undergoes transition into an arch which approaches the lower limb (12) such that in the vicinity of the free end (20) an arched clamping surface (22) is formed, after which the arch toward the free end (20) undergoes transition away from the lower limb (14).

5. The device according to any of Claims 1 to 4, **characterised in that** for a solar panel (2) in which holding regions are formed by edge zones (8) which have a smaller thickness than the solar modules (6) located within the edge zones (8), the profiled limbs (12, 14) of the clamping holders (10) are joined to one another via a profiled web (16) the length of which is less than the height of the solar panel (2), which height is formed from the thicknesses of the solar modules (6) and edge zones (8).

6. The device according to any of Claims 1 to 5, **characterised in that** the profiled body of the clamping holders (10) is formed from a thermoplastic, easily cementable polymer, for example acrylonitrile-butadiene-styrene (ABS).

7. The device according to any of Claims 1 to 6, **characterised in that** at least the part of the clamping holder (10) which is exposed in the clamping state is provided on the outside with a sun-proof and weather-proof coating (24), for example made of polymethyl methacrylate (PMMA).

8. The device according to any of Claims 1 to 7, **characterised in that** as the connecting element (30), an adhesive fastener part is attached to the fastening surface (26) of the lower profiled limb (14), the interlocking elements of which adhesive fastener part form an adhesive connection to interlocking elements located on the supporting structure.

## Revendications

1. Dispositif de fixation de mats de type panneau, notamment de panneaux (2) solaires photovoltaïques souples, sur une structure porteuse, comprenant au moins un support (10) de serrage sous la forme d'un tronçon d'une pièce profilée en matière plastique, qui a des branches (12, 14) de profilé opposées, qui forment entre elles un espace (18) de serrage d'une région (8) de maintien, qui y est reçue, du mat concerné, région dans laquelle les branches (12, 14) du profilé s'appliquent par une force de serrage élastique au côté supérieur et au côté inférieur de la région (8) de maintien, la branche (14) du profilé, qui s'applique à l'état serré au côté inférieur tourné vers la structure porteuse de la région (8) de maintien, formant sur son côté extérieur une surface (26) de fixation, qui est pourvue d'un élément (30) de liaison servant au montage sur la structure porteuse.

2. Dispositif suivant la revendication 1, **caractérisé en ce qu'**il est prévu des supports (10) de serrage, ayant des branches (12, 14) de profilé s'étendant en longueur, sous la forme de bandes plates, dont la branche (14) inférieure, s'appliquant au côté inférieur de la région (8) de maintien d'un mat concerné, est plus longue que la branche (12) supérieure.

3. Dispositif suivant la revendication 2, **caractérisé en ce que** la branche (14) inférieure a la forme d'une bande plane et forme, du côté intérieur, une surface (22) de serrage plane de la région (8) de maintien du panneau (2) solaire et, du côté extérieur, une surface (26) plane de fixation recevant l'élément (30) de liaison.

4. Dispositif suivant la revendication 3, **caractérisé en ce que** la branche (12) supérieure a, dans sa région initiale, un tracé plan correspondant à la branche (14) inférieure et, dans sa partie longitudinale médiane, se transforme en un tracé incurvé se rapprochant de la branche (12) supérieure, de manière à former, au voisinage de l'extrémité (20) libre, une surface (22) de serrage incurvée, la courbure se transformant vers l'extrémité (20) libre en un tracé s'éloignant de la branche (14) inférieure.

5. Dispositif suivant l'une des revendications 1 à 4, **caractérisé en ce que**, pour un panneau (2) solaire, dans lequel des régions de maintien sont formées par des zones (8) de bord, d'une épaisseur plus petite que celle des modules (6) solaires intérieurs se trouvant à l'intérieur des zones (8) de bord, les branches (12, 14) de profilé du support (10) de serrage sont en rapport entre elles par une entretoise (16) profilée, dont la longueur est plus petite que la hauteur, formée des épaisseurs des modules (6) solaires et des zones (8) de bord, du panneau (2) solaire.

6. Dispositif suivant l'une des revendications 1 à 5, **caractérisé en ce que** la pièce profilée du support (10) de serrage est en un polymère thermoplastique pouvant bien se coller, par exemple en acrylonitrile, butadiène, styrène (ABS).

7. Dispositif suivant l'une des revendications 1 à 6, **caractérisé en ce qu'**au moins la partie, dégagée à l'état serré, du support (10) de serrage, est pourvue du côté extérieur d'une couche (24) résistant au soleil et aux intempéries, par exemple en (poly)méthacrylate de méthyle (PMMA).

8. Dispositif suivant l'une des revendications 1 à 7, **caractérisé en ce qu'**il est mis comme élément (30) de liaison sur la surface (26) de fixation de la branche (14) de profilé inférieure, une pièce de fermeture autoagrippante, dont les éléments d'accrochage donnent une liaison autoagrippante avec les éléments d'accrochage se trouvant sur la structure porteuse.
